# EUROPEAN PATENT APPLICATION

(11) **EP 3 552 944 A1**
(43) Date of publication of application: **16.10.2019**
(21) Application number: 19169017.1
(22) Date of filing: 12.04.2019
(51) Int. Cl.: B62M 9/08

(54) **CRANKSET OF BICYCLE**

(30) Priority: 13.04.2018 TW 107112671
(71) Applicant: Drivetrain Tech Solution Inc., Taichung City 412 (TW)
(72) Inventor: Chen, Po Cheng, Taichung City 412 (TW)
(74) Representative: Cabinet Chaillot

(57) **Abstract**

A crankset of a bicycle includes a chainring (10) having teeth (12) on an outer edge thereof, a spider (20) connected to the chainring (10), and a crank arm (30) connected to the spider (20). An offset (50) is formed between a center of rotation of the crank arm (30) and a center of the chainring (10), so that the chainring (10) has a longest force arm (16), which is a longest distance between the center of rotation of the crank arm (30) and the outer edge of the chainring (10) and a shortest force arm (18), which is a shortest distance between the center of rotation of the crank arm (30) and the outer edge of the chainring (10). An orientation angle is formed between the longest force arm (16) and the crank arm (30), and the orientation angle is in a range between 30 degrees and 150 degrees.

## Description

### BACKGROUND OF THE INVENTION

### 1. Technical Field

The present invention relates generally to a bicycle, and more particularly to a crankset of a bicycle.

### 2. Description of Related Art

Typically, a conventional crankset of a bicycle has a round chainring and a pair of crank arms. Some improved crankset is provided with a non-circular chainring, such as an elliptical chainring. The elliptical chainring has an orientation angle, which is an included angle between a major axis of the elliptical chainring and an extending line of the crank arms. Changing the orientation angle of the crankset may provide the bicycle a specific character and power transmission.

U.S. patent no. 9,005,062 provided a crankset with an ovoid chainring and a pair of crank arms. The ovoid chainring is provided with an odd number of anchorage points for the chainring. The case from the chainring presents orientation parament increments of 3°.

Taiwan utility model no. M410712 taught a crankset, having a chainring, a fixed disk, a pair of crank arms, and a connecting device. The chainring is non-circular, having a round bore at a center thereof. The chainring is provided with teeth at an edge of the bore. The fixed disk is provided with teeth to be meshed with the teeth of the chainring. The crank arms are fixed to the fixed disk, and the connecting device fixes the fixed disk to the chainring. As a result, the fixed disk is able to be connected to the chainring with a desirable orientation, and the fixed to the chairing by the connecting device to let the crankset have a predetermined orientation angle.

### BRIEF SUMMARY OF THE INVENTION

In view of the above, the primary objective of the present invention is to provide a crankset of a bicycle, which provides a non-circular path of motion to generate a desired power transmission.

In order to achieve the objective of the present invention, a crankset of a bicycle includes a chainring having teeth on an outer edge thereof, a spider connected to the chainring, and a crank arm connected to the spider. An offset is formed between a center of rotation of the crank arm and a center of the chain ring, so that the chainring has a longest force arm, which is a longest distance between the center of rotation of the crank arm and the outer edge of the chainring and a shortest force arm, which is a shortest distance between the center of rotation of the crank arm and the outer edge of the chainring. An orientation angle is formed between the longest force arm and the crank arm, and the orientation angle is in a range between 30 degrees and 150 degrees.

The chainring may be circular or elliptical, and the chainring and the spider are made into a single element, and the crank arms are connected to the spider with different angles, or the spider and the crank arm are made into a single element, and the spider is connected to the chainring with different angles.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a front view of a first preferred embodiment of the present invention;
FIG. 2 is a sketch diagram of the first preferred embodiment of the present invention, showing position and angle relationship of the chainring and the crank arms;
FIG. 3 is a front view of a second preferred embodiment of the present invention, showing the chainring, the spider and the crank arms;
FIG. 4 is a front view of the second preferred embodiment of the present invention, showing how to change the angle of the crank arms related to the chainring;

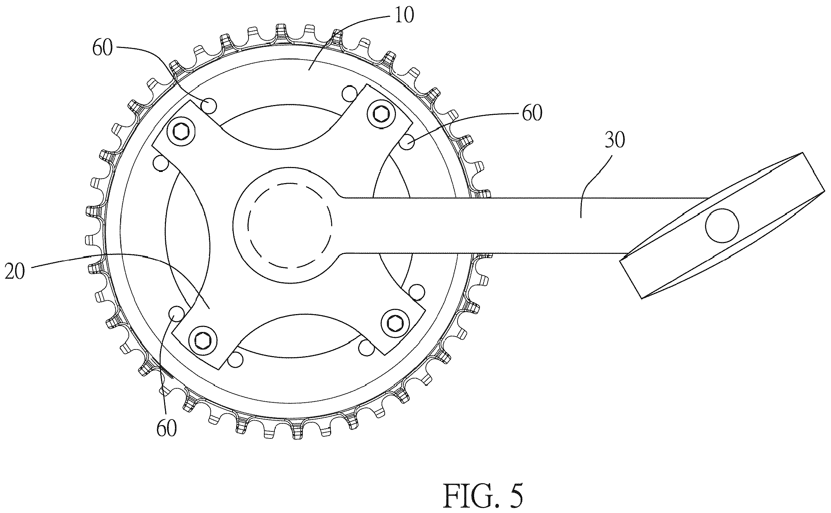

FIG. 5 is a front view of a third preferred embodiment of the present invention;

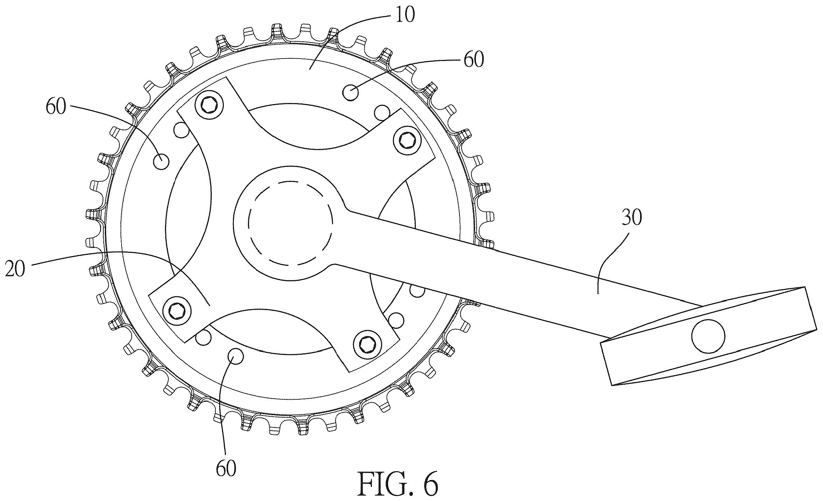

FIG. 6 is a front view of the third preferred embodiment of the present invention, showing how to change the angle of the crank arms related to the chainring; and
FIG. 7 is a front view of a fourth preferred embodiment of the present invention.

### DETAILED DESCRIPTION OF THE INVENTION

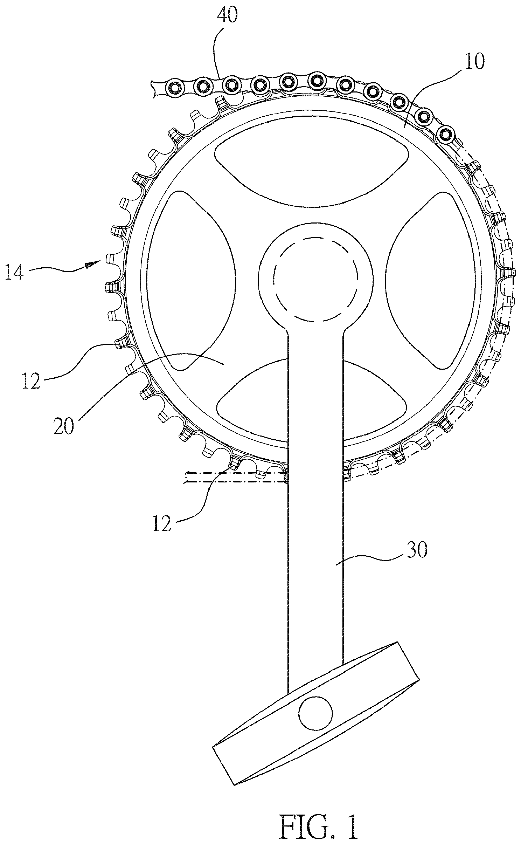

As shown in FIG. 1, a crankset of the first preferred embodiment of the present invention includes a chainring 10, a spider 20, and a pair of crank arms 30 (only one of them is shown in drawing). The chainring 10 has a teeth portion 14, which includes a plurality of teeth 12 on an outer edge thereof, to engage a chain 40. The spider 20 is connected to the chainring 10, and the crank arms 20 are connected to opposite sides of the spider 20 (only one of them is shown in drawing).

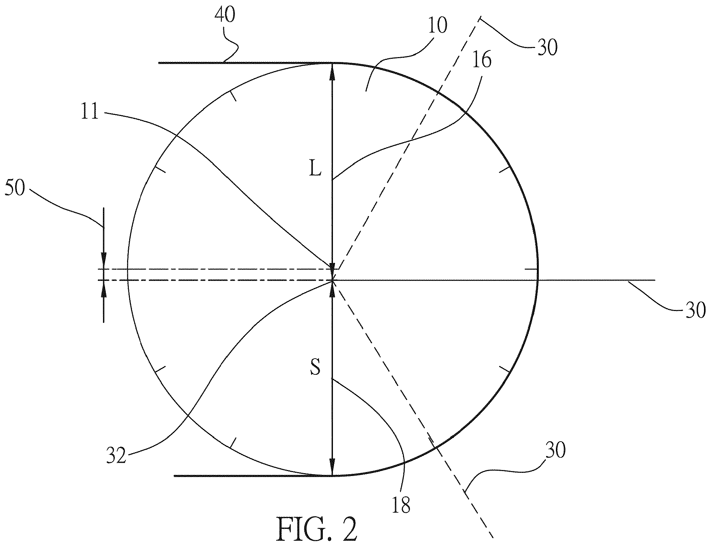

As shown in FIG. 2, the crankset of the first preferred embodiment has an offset 50 between a center of rotation 32 of crank arm 30 and a center 11 of the chainring 10. In other words, the crank arm 30 is eccentric related to the chainring 10. Therefore, the crankset has a longest force arm 16, which is a longest distance between the center of rotation 32 of crank arm 30 and the outer edge of the chainring 10, and a shortest force arm 18, which is a shortest distance between the center of rotation 32 of crank arm 30 and the outer edge of the chainring 10. An orientation angle, which is an included angle between the crank arm 30 and the longest force arm 16, is in a range between 30 degrees and 150 degrees. The offset 50 is between 1.0mm and 7.0mm. In the first preferred embodiment, the orientation angle is 90 degrees and the offset 50 is 5.0mm. The teeth 12 of the chainring 10 move in a non-circular path of motion. The non-circular path of motion is close to a circular path of motion to provide the chainring 10 a smooth movement when a rider is stepping the crank arms 30.

With the designation of the first preferred embodiment, when the chainring 10 rotates to an angle as shown in FIG. 2, the crank arm 30 is at a three-o'clock direction of the chainring 10, which is the position of the rider exerting the maximum power on the pedal of the crank arm 30, while the longest force arm 16 is at a twelve-o'clock direction of the chainring 10, which is a position of the chain 40 beginning to engage the teeth 12 of the chainring 10. As a result, the crankset of the first preferred embodiment provides a maximum power transmission to drive the bicycle moving forward.

In consideration of different riders riding the bicycle in different ways and road conditions, the orientation angle is adjustable in a range between 60 degrees and 120 degrees.

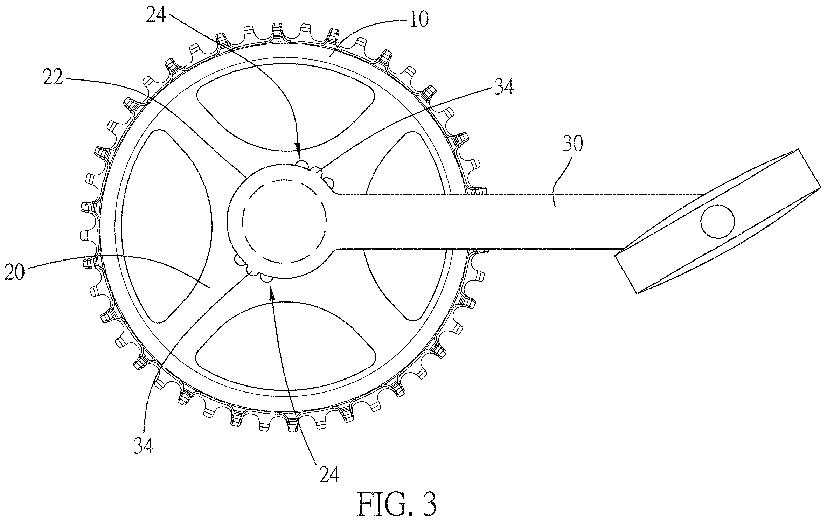

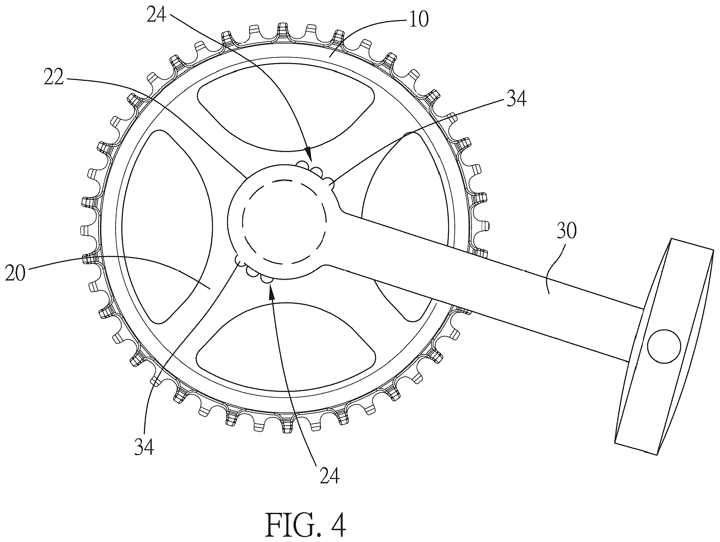

As shown in FIG. 3 and FIG. 4, the second preferred embodiment of the present invention provides a crankset, which is the same as the first preferred embodiment, except that the chainring and the spider 20 are made into a single element. The spider 20 has a connecting bore 22, to which the crank arm 30 is connected. Precisely, the spider 20 is provided with a plurality of first engaging portions 24 at an edge of the connecting bore 22, and the crank arm 30 has a second engaging portion 34. The second engaging portion 34 is able to engage any one of the first engaging portions 24 to adjust the orientation angle when the crank arm 30 engages the connecting bore 22 with different angles.

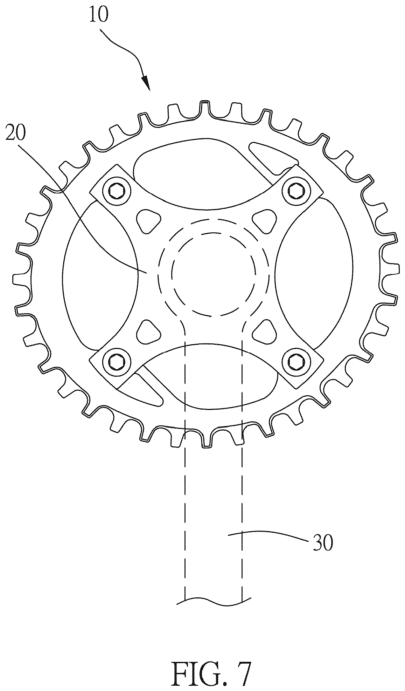

As shown in FIG. 7 and FIG. 8, the thrd preferred embodiment of the present invention provides a crankset, which is the same as above, except that the spider 20 and the crank arm 30 are made into a single element. Precisely. The chainring 10 has a plurality of openings 60, and the spider 20 is able to be connected to different openings 60 of the chainring 10 to adjust the orientation angle.

FIG. 7 shows a crankset of the fourth preferred embodiment of the present invention, including a chainring 10, a spider 20, and a pair of crank arms 30. The chainring 10 of the fourth preferred embodiment is elliptical. The chainring 10 and the spider 20 are made into a single element, and the crank arms 30 are connected to the spider 20 with different angles, or the spider 20 and the crank arm 30 are made into a single element, and the spider 20 is connected to the chainring 10 with different angles.

In conclusion, the present invention provides a circular or an elliptical chainring, and the crank arms are connected to the chainring in an eccentric arrangement to provide the chainring a non-circular path of motion. The path of motion of the chainring is adjustable by changing the orientation angle and the offset to provide an optimal power transmission according to the different riders and different road condition.

It must be pointed out that the embodiments described above are only some preferred embodiments of the present invention. All equivalent structures which employ the concepts disclosed in this specification and the appended claims should fall within the scope of the present invention.

## Claims

1. A crankset of a bicycle, comprising:
a chainring (10) having teeth (12) on an outer edge thereof;
a spider (20) connected to the chainring (10); and
a crank arm (30) connected to the spider (20);
wherein an offset (50) is formed between a center of rotation of the crank arm (30) and a center of the chainring (10), so that the chainring (10) has a longest force arm (16), which is a longest distance between the center of rotation of the crank arm (30) and the outer edge of the chainring (10) and a shortest force arm (18), which is a shortest distance between the center of rotation of the crank arm (30) and the outer edge of the chainring (10);
wherein an orientation angle is formed between the longest force arm (16) and the crank arm (30), and the orientation angle is in a range between 30 degrees and 150 degrees.

2. The crankset of claim 1, wherein the offset (50) is in a range between 1.0mm and 7.0mm.

3. The crankset of claim 1, wherein the chainring (10) and the spider (20) are made into a single element, and the crank arm (30) is an independent element and connected to the spider (20).

4. The crankset of claim 3, wherein the spider (20) has a connecting bore (22), to which the crank arm (30) is connected, and a plurality of first engaging portions (24) on an edge of the connecting bore (22); the crank arm (30) has a second engaging portion (34); the crank arm (30) is connected to the connecting bore (22) of the spider (20) with the second engaging portion (34) of the crank arm (30) engaging one of the first engaging portions (24) of the spider (20) to change the orientation angle.

5. The crankset of claim 1, wherein the crank arm (30) and the spider (20) are made into a single element, and the chainring (10) is an independent element and connected to the spider (20).

6. The crankset of claim 5, wherein the chainring (10) has a plurality of openings (60), and the spider (20) is connected to different openings (60) to change the orientation angle.

7. The crankset of claim 1, wherein the chainring (10) is circular.

8. The crankset of claim 1, wherein the chainring (10) is elliptical.
